# EUROPÄISCHE PATENTSCHRIFT

(11) **EP 3 884 241 B1**
(45) Veröffentlichungstag und Bekanntmachung des Hinweises auf die Patenterteilung: **02.11.2022**
(21) Anmeldenummer: 19703950.6
(22) Anmeldetag: 18.01.2019
(51) Int. Cl.: G01D 5/347, G01D 5/244, G01D 5/245

(54) **MESSWERTGEBER FÜR FAHRTREPPENWELLE**
MEASUREMENT ENCODER FOR ESCALATOR SHAFT
CODEUR DE MESURE POUR ARBRE D'ESCALATOR

(43) Veröffentlichungstag der Anmeldung: 29.09.2021
(73) Patentinhaber: Elgo Batscale AG, 9496 Balzers (LI)
(72) Erfinder: PRIESER, Martin, 10557 Berlin (DE); HOYER, Jörn, 14979 Grossbeeren (DE); ROHR, Stephan, 8883 Quarten (CH)
(74) Vertreter: Patent- und Rechtsanwälte Behrmann Wagner PartG mbB
(86) Internationale Anmeldenummer: PCT/EP2019/051272
(87) Internationale Veröffentlichungsnummer: WO 2020/147969

(56) Entgegenhaltungen:
- EP-A2- 1 612 564
- EP-A2- 2 660 610
- DE-A1-102010 030 121
- DE-U1-202010 007 285
- US-A- 4 002 937
- US-A1- 2003 173 119

## Beschreibung

Die vorliegende Erfindung betrifft einen Messwertgeber für eine Welle einer Fahrtreppe zur Bereitstellung einer Lagekodierung mittels eines magnetischen Massbands und ein den Messwertgeber aufweisendes System.

Fahrtreppen oder Rolltreppen umfassen im Allgemeinen einen Antrieb, welcher mittels einer Kette eine Hauptwelle antreibt, welche wiederum die Fahrtreppenstufen antreibt. Im Falle eines Kettenbruchs fahren die Treppenstufen ungebremst nach unten, was vor allem bei Belastung durch Menschen auf der Fahrtreppe zu schweren Unfällen führen kann. Aus diesem Grund werden bei Fahrtreppen meist die Ketten überwacht und wird bei einem Kettenbruch sofort die Hauptachse gebremst.

Herkömmliche Systeme überwachen mittels Induktivsensoren die einzelnen Kettenzähne. Da sich die Antriebskette der Fahrtreppe sehr langsam bewegt ist die Rückmeldung durch ein derartiges System im Falle eines Kettenbruchs deutlich verzögert, was zum Aufbauen einer bereits gefährlichen Geschwindigkeit der Fahrtreppe vor deren Abbremsen führen kann.

Ebenfalls bekannt sind Systeme, welche die Antriebswelle der Fahrtreppe mittels einer optischen Sensorik überwachen. Diese Systeme weisen im Allgemeinen ein an der Welle befestigtes kodiertes Band auf, welches mittels einer Kamera optisch abgetastet wird.

CN 104370199A lehrt beispielsweise die Bereitstellung eines kodierten Informationsgürtels auf einer Fahrtreppenwelle, welcher über einen kontinuierlich angeordneten QR Code an einer Umfangsfläche verfügt und optisch zur Erkennung der Rotationsgeschwindigkeit abgetastet wird.

CN 104340835B lehrt die Bereitstellung eines optischen Codes an einer Umfangsfläche oder Seitenfläche eines rotierenden Körpers, der mit einer Antriebswelle der Fahrtreppe verbunden ist, wobei der Code mittels eines optischen Sensors ausgelesen wird.

Die bekannten optischen Systeme weisen den Nachteil einer erhöhten Störanfälligkeit bei einer in die Mechanik der Fahrtreppe eintretenden Verschmutzung auf. Dies kann insbesondere bei Außenanwendungen der Fahrtreppen ein großes Problem darstellen. Ebenso sind aber Fahrtreppen im Innenbereich von Verschmutzung durch beispielsweise Staub oder Öl betroffen. US 2003/173119 A1 offenbart ein weiteres optisches System.

Ebenfalls bekannt sind magnetische Systeme, in welchen ein magnetischer Ring oder Polrad an einer Fahrtreppenwelle befestigt wird und durch eine entsprechende Sensorik abgetastet wird. Diese Systeme sind unempfindlicher gegen Umwelteinflüsse und daher kostengünstiger in Einbau und Wartung. Eine Problematik, die sich hierbei stellt, ist, dass sich ein magnetischer Ring schwierig in zwei Hälften teilen lässt, ohne das Magnetfeld so zu stören, dass ein Sensor den Ring nicht mehr als homogen magnetisiert erkennt. Des Weiteren sind immer zwei Sensoren zum Abtasten des Magnetrings an unterschiedlichen Positionen notwendig, um ein vorhandenes Loch in der Kodierung des Magnetrings sicher zu erkennen. Gerade bei Anwendungen, bei denen eine bestehende Fahrtreppe mit einem derartigen System nachgerüstet werden soll, ist dies ein entscheidender Nachteil von den bekannten Magnetringen. DE 20 2010 007285 U1 und DE 10 2010 030121 A1 offenbaren weitere magnetische Systeme.

EP 2 455 722 A offenbart einen Messwertgeber für Windkraftanlagen, aufweisend einen justierbaren Tragering, welcher an eine schnelldrehende Welle von relativ großem Umfang angepasst und insbesondere zu dieser zentriert werden kann, sowie ein darauf aufgebrachtes magnetisches Band, welches von einer magnetischen Sensoranordnung des Systems auslesbar ist. Diese Lösung ist jedoch von hoher fertigungstechnischer Komplexität und somit für den Einsatz in Fahrtreppen zu kostenintensiv. Des Weiteren benötigt auch diese Anordnung die Bereitstellung von wenigstens zwei Sensoren, um ein vorhandenes Loch in der Kodierung des Magnetbands zu erkennen (siehe auch parallele Anmeldung EP 2 660 567 A1).

Ausgehend von dem vorgenannten Stand der Technik liegt der vorliegenden Erfindung die Aufgabe zugrunde, einen verbesserten Messwertgeber und ein zugehöriges Messsystem bereitzustellen, welcher eine optimierte magnetische Erfassung ermöglicht, an bestehende Fahrtreppenwellen vereinfacht anbringbar und zudem einfach und kostengünstig herstellbar ist. Diese Aufgabe wird durch den Gegenstand der unabhängigen Ansprüche gelöst. Die Unteransprüche stellen vorteilhafte Weiterbildungen der vorliegenden Erfindung dar.

In einem ersten Aspekt betrifft die Erfindung einen Messwertgeber für eine Welle einer Fahrtreppe zur Bereitstellung einer Lagekodierung aufweisend einen Trägerring und ein darauf umfangsseitig angeordnetes magnetisches Massband, wobei der Trägerring und das Massband zweiteilig in Form von vorzugsweise halbkreisförmigen Elementen ausgebildet sind und in einem jeweiligen Verbindungsbereich selektiv über Verbindungsmittel des Trägerrings miteinander verbindbar sind, wobei das Massband eine Vielzahl in Umfangsrichtung angeordneter magnetischer Pole aufweist, wobei die magnetischen Pole derart im Massband angeordnet sind, dass sich ein einzelner magnetischer Pol in Umfangsrichtung bzw. Abtastrichtung des Messwertgebers über den jeweiligen Verbindungsbereich von Trägerring und Massband erstreckt.

Hierunter wird insbesondere verstanden, dass sich der einzelne magnetische Pol in Draufsicht auf den Messwertgeber bzw. das Massband des Messwertgebers über den jeweiligen Verbindungsbereich von Trägerring und Massband erstreckt. Draufsicht ist hierbei definiert als eine Aufsicht auf eine Umfangsfläche des Messwertgebers bzw. des Massbands in eine Richtung orthogonal zur Rotationsachse des Messwertgebers bzw. des Massbands.

Durch die erfindungsgemäße Anordnung wird erzielt, dass der durch einen vorgesehenen Sensor erfassbare Feldlinienverlauf des Massbands bzw. des Messwertgebers bei einer Rotation des Messwertgebers um seine Rotationsachse zuverlässig als homogen erkannt wird, trotz der zweiteiligen Ausführung des Massbands und des Trägerrings. Der Messwertgeber kann somit von einem einzelnen magnetischen Sensor abgetastet werden. Dies ist im starken Gegensatz zum Stand der Technik, bei welchem gegenüberliegende Enden eines magnetischen Massbands jeweils eine unterschiedliche Polung und/oder eine magnetische Lücke aufweisen, wodurch die Vorteile der vorliegenden Erfindung nicht erzielbar sind.

In einem bevorzugten Ausführungsbeispiel ist der jeweilige Verbindungsbereich von Trägerring und Massband gegenüber einer Umfangsrichtung bzw. Abtastrichtung des Messwertgebers geneigt angeordnet. Hierunter wird insbesondere verstanden, dass der jeweilige Verbindungsbereich in Draufsicht auf den Messwertgeber bzw. dass Massband des Messwertgebers gegenüber der Umfangsrichtung geneigt angeordnet ist. Durch eine derartige Anordnung erscheint der abtastbare Feldlinienverlauf des Messwertgebers bei dessen Rotation über den Verbindungsbereich noch störungsfreier für den Sensor.

Der jeweilige Verbindungsbereich kann gegenüber einer Umfangsrichtung bzw. Abtastrichtung des Messwertgebers in einem Winkel von 35-65°, mehr bevorzugt im Winkel von 40 bis 50° und am bevorzugtesten in einem Winkel von etwa 45° angeordnet sein.

In einer alternativen Ausführungsform kann der Verbindungsbereich von Trägerring und Massband auch orthogonal zur Umfangsrichtung bzw. Abtastrichtung des Messwertgebers angeordnet sein. In einer bevorzugten Ausführungsform sind die magnetischen Pole im Massband derart angeordnet, dass der jeweilige Verbindungsbereich des Massbands in einem zentralen bzw. mittigen Bereich des sich über den Verbindungsbereich erstreckenden Pols angeordnet ist. Ein derartig mittiger Bereich erstreckt sich vorzugsweise mittig zu den jeweiligen Polgrenzen und weist bevorzugt eine Fläche von bis zu 50%, mehr bevorzugt bis zu 25% des sich über den Verbindungsbereich erstreckenden Pols auf. Der jeweilige Verbindungsbereich des Massbands kann auch derart angeordnet sein, dass dieser den sich über den Verbindungsbereich erstreckenden Pol des Massbands vorzugsweise annähernd hälftig teilt und/oder dass der sich über den jeweiligen Verbindungsbereich des Massbands erstreckende Pol an diesem annähernd zentriert ist.

Der jeweilige Verbindungsbereich des Massbands und/oder des Trägerrings ist vorzugsweise eine Ebene, an der sich die jeweiligen Enden des Massbands und/oder des Trägerrings gegenüberliegen. Die im Verbindungsbereich gegenüberliegenden Enden des Massbands erstrecken sich dabei vorzugsweise direkt innerhalb eines einzelnen magnetischen Pols des Massbands. Die jeweiligen Enden von Massband und/oder Trägerring sind hierbei vorzugsweise im Wesentlichen parallel zueinander ausgerichtet.

Ein im Verbindungsbereich liegender Spalt zwischen den jeweiligen Enden des Trägerrings weist vorzugsweise eine Dicke von weniger als 1 mm, vorzugsweise weniger als 0,6mm auf. Hierbei kann die Dicke des Spalts beispielweise zwischen 0,1 und 0,6 mm liegen. Ein im Verbindungsbereich liegender Spalt zwischen den jeweiligen Enden des Massbands weist vorzugsweise eine Dicke von weniger als 0,8mm, vorzugsweise weniger als 0,3mm auf. Hierbei kann die Dicke dieses Spalts beispielsweise zwischen 0,1 und 0,3 mm liegen. Durch diese optimierte Ausgestaltung des Verbindungsbereichs wird noch stärker gewährleistet, dass keine magnetische Lücke oder Inkonsistenz in Umfangrichtung des verbundenen Trägerrings und Massbands über den jeweiligen Verbindungsbereich auftritt.

Der Trägerring und das Massband sind vorzugsweise in zwei im Wesentlichen gleichgroße Elemente teilbar, welche halbkreisförmig ausgebildet sind. Trägerring und Massband können jedoch auch eine hiervon abweichende Teilung aufweisen, beispielsweise eine Teilung in drei oder mehr im Wesentlichen kreisabschnittsförmige Segmente.

In einer bevorzugten Ausführungsform sind die magnetischen Pole des Massbands in Umfangsrichtung im Wesentlichen unterbrechungsfrei angeordnet. Dies bedeutet, dass die einzelnen Pole direkt aneinandergrenzend in Umfangsrichtung angeordnet bzw. in das Massband eingebracht sind. Somit sind in Umfangsrichtung vorzugsweise keine magnetischen Lücken im Massband vorhanden.

Die magnetischen Pole sind vorzugsweise in Umfangrichtung des Massbands alternierend angeordnet. Dies bedeutet insbesondere, dass Nord und Südpol abwechselnd in Umfangsrichtung im Massband angeordnet bzw. darin eingebracht sind. Hierdurch kann insbesondere eine inkrementelle Kodierung bereitgestellt werden. In einer alternativen Ausführungsform kann die Lagekodierung auch eine Absolutkodierung bereitstellen. Hierbei können die magnetischen Pole in Umfangsrichtung in einer vordefinierten Anordnung oder Abfolge vorliegen. Dabei kann insbesondere die jeweilige Pollänge in Umfangsrichtung und/oder die Polart, d.h. insbesondere Nord oder Südpol, in Umfangsrichtung aufeinanderfolgender Pole variieren oder unregelmäßig ausgebildet sein.

Die einzelnen magnetischen Pole des Massbands weisen vorzugsweise eine homogene Pollänge in Umfangsrichtung auf. Die Pollänge der einzelnen Pole in Umfangsrichtung liegt vorzugsweise zwischen 10 bis 20mm und mehr bevorzugt zwischen 15 und 17mm. Die einzelnen Pole erstrecken sich in Draufsicht auf die Umfangsfläche des Massbands vorzugweise über die komplette Breite des Massbands.

Durch die magnetischen Pole wird eine Lagekodierung des Messwertgebers bereitgestellt, welche vorzugsweise einen Massstab bildet, der von einem geeigneten magnetischen Sensor ausgelesen bzw. abgetastet werden kann. Die Lagekodierung wird vorzugsweise durch ein in Umfangsrichtung des Messwertgebers periodisch widerkehrendes Signal geformt, welches eine vordefinierte Frequenz aufweisen kann.

Ein Außendurchmesser des Massbands und/oder ein Außendurchmesser des Trägerrings sind vorzugsweise an eine vordefinierte Pollänge der magnetischen Pole in Umfangsrichtung angepasst, derart, dass keine magnetische Lücke oder Inkonsistenz in Umfangrichtung des verbundenen Trägerrings und Massbands vorliegt.

Ein Innendurchmesser des Trägerrings ist vorzugsweise auf einen Außendurchmesser der Fahrtreppenwelle angepasst. Der Messwertgeber kann Einstellmittel aufweisen, beispielsweise in der Form einen länglichen Gummibands, vorzugsweise eines doppelseitigen Klebebands, welche zwischen der Fahrtreppenwelle und dem Trägerring anordenbar sind. Die Einstellmittel dienen im Wesentlichen dem Ausgleich von Toleranzen bei der Montage und ermöglichen eine verdrehsichere Anbringung des Trägerrings auf der Fahrtreppenwelle.

Die Breite des Massbands ist vorzugsweise auf den Trägerring abgestimmt und kann im Wesentlichen der Breite des Trägerrings entsprechen.

Vorteilhafterweise weist der Trägerring eine etwas größere Breite, vorzugsweise eine 1 bis 15% größere, mehr bevorzugt eine 5 bis 10% größere Breite als das Massband auf.

In einer bevorzugten Ausführungsform ist der Trägerring aus Metall, vorzugsweise aus Eisen. Der Trägerring weist vorzugsweise eine homogene Breite und Dicke auf. Das Massband ist vorzugsweise aus ferromagnetischem Material, beispielsweise ferromagnetischem Kunststoff. In einer bevorzugten Ausführungsform besteht das Massband aus einem Elastomer mit darin eingebetteten ferromagnetischen Partikeln. Die Partikel können vorzugsweise eindomänige Strontiumferrit Partikel sein. Alternativ können andere ferromagnetische Partikel enthalten sein, wie beispielsweise Barium Ferrit, Neodym, Neodym-Eisen-Bor (NdFeB) oder Samarium Cobalt (CoSm) Partikel.

Das Massband ist vorzugsweise mit dem darunterliegenden Trägerring verklebt. Hierfür kann eine vor dem Aufbringen des Massbands auf den Umfang des Trägerrings aufgebrachte Klebeschicht vorgesehen sein.

Die magnetischen Pole bzw. die durch diese gebildete Lagekodierung wird mittels Magnetisierung des Massbands erzielt. Vorteilhafterweise ist die Lagekodierung mittels Magnetisierung des Massbands und Trägerrings im verbundenen Zustand eingebracht. Dies bedeutet, dass nach der Fertigung des Trägerrings und der Aufbringung des Massbands, eine Magnetisierung der zusammengesetzten Bauteile erfolgt. Durch die gleichzeitige Magnetisierung des Massbands zusammen mit dem Trägerring können im Massband ausgebildete Pole gleichermaßen bzw. im Wesentlichen in der gleichen Anordnung im darunterliegenden Trägerring vorliegen. Sofern in der Beschreibung von einem Vorhandensein der beschriebenen Pole im Massband gesprochen wird, kann dies auch eine mögliche Ausgestaltung der entsprechenden Polanordnung im darunterliegenden Trägerring umfassen. Alternativ kann die beschriebene Magnetisierung auch nur im Massband vorliegen.

Das Massband wird vorzugsweise nach Fertigung des Trägerrings und im verbundenen Zustand des Rings auf diesen aufgebracht oder verklebt. Hierbei kann eine vordefinierte bzw. ausgewählte Länge eines durchgehenden Bandes umfangsseitig auf den Trägerring derart aufgebracht werden, dass sich die entsprechenden Enden des Bandes in einem ersten Verbindungsbereich des Trägerrings gegenüberliegen, vorzugsweise derart, dass die jeweiligen Verbindungsbereiche von Trägerring und Band in Draufsicht im Wesentlichen einheitlich verlaufen und/oder überlappen. Im zweiten vorzugsweise gegenüberliegenden Verbindungsbereich des Trägerrings wird dann ein zweiter Verbindungsbereich bzw. Spalt des Bands erzeugt, vorzugsweise derart, dass auch dieser Verbindungsbereich des Bands einheitlich mit dem darunterliegenden Verbindungsbereich des Trägerrings verläuft. Dies kann beispielsweise durch gezieltes Einschneiden des Bands auf dem Trägerring erfolgen. Eine gemeinsame Magnetisierung des Trägerrings und des aufgebrachten Bandes erfolgt vorzugweise vor dem Einschneiden des Bands. Alternativ kann die gemeinsame Magnetisierung auch nach dem Einschneiden des Bands erfolgen.

Die Verbindungsmittel des Trägerrings weisen vorzugsweise mindestens eine Durchgangsbohrung zur Aufnahme eines Passstiftes auf, die parallel zu einer Verbindungsebene der Trägerringelemente verlaufen kann. Vorteilhafterweise verläuft die Durchgangsbohrung axial versetzt zur Verbindungsebene der Trägerringelemente. Hierbei ist die Durchgangsbohrung vorzugsweise zu mehr als 60%, beispielsweise zwischen 60-70%, mehrbevorzugt zu mehr als 70%, beispielsweise zwischen 70% und 85%, ihrer Fläche in einem der Trägerringelemente angeordnet. Die Durchgangsbohrung und der eingesetzte Passstift sind vorzugsweise derart ausgestaltet, dass ein bei der Herstellung des Trägerrings auftretender Spalt durch Materialabtrag bei der Trennung des Rings in die Einzelelemente, insbesondere die Einzelhälften, ausgeglichen wird, wodurch die anfängliche optimale kreisrunde Form des Rings auch im zusammengesetzten Zustand erhalten bleibt.

Die Verbindungsmittel weisen vorzugsweise jeweils mindestens eine Schraubverbindung auf, welche orthogonal zu einer Verbindungsebene der Trägerringelemente angeordnet sein kann. Die Schraubverbindung kann durch eine gestufte Bohrung in einem Ringelement und eine Durchgangsbohrung im zu verbindenden Ringelement gebildet sein, welche mittels einer Schraube verbindbar sind.

Die Verbindungsmittel können auch jeweils zwei benachbarte Bohrungen in den jeweiligen Enden der Trägerringelemente aufweisen, welche vorzugsweise parallel zur Rotationsachse des Trägerrings angeordnet sind und in welche mit einer Halteplatte verbundene Zylinderstifte einsetzbar sind. Zur Sicherung der Zylinderstifte kann ein federelastisches Spannelement, beispielsweise eine Montageklammer, vorgesehen sein.

In einem weiteren Aspekt betrifft die Erfindung ein Messsystem aufweisend einen Messwertgeber wie oben beschrieben und eine Sensoranordnung zum Abtasten der Lagekodierung bzw. der magnetischen Pole des Messwertgebers. Die Sensoranordnung ist vorzugsweise derart angeordnet, um eine Feldlinienveränderung des Messwertgebers bei einer Rotation um dessen Rotationsachse abzutasten. Die Sensoranordnung ist vorzugsweise umfangsseitig zum Messwertgeber bzw. zu dessen Massband, insbesondere innerhalb einer radialen Erstreckung des Messwertgebers bzw. des Massbands angeordnet.

Die Sensoranordnung weist vorzugsweise lediglich einen einzelnen Sensor zur Abtastung des Messwertgebers auf. Der Sensor kann beispielsweise ein Hall-Sensor oder ein Sensor der MR Klasse, wie beispielsweise ein AMR oder GMR Sensor, sein. Bei dem Sensor kann es sich beispielsweise auch um einen DMIX Sensor der Firma ELGO handeln.

Die Sensoranordnung ist vorzugsweise dazu eingerichtet, die die Lage, Geschwindigkeit und/oder Beschleunigung der Welle an eine übergeordnete Steuerung weiterzugeben. Dies erfolgt vorzugsweise über eine Abtastung des Feldlinienverlaufs der magnetischen Pole des Messwertgebers bei dessen Rotation aufgrund der Rotation der Fahrtreppenwelle. Die Sensoranordnung und/oder die Steuerung kann hierzu einen entsprechend konfigurierten Mikrokontroller aufweisen.

Die Sensoranordnung ist vorzugsweise in einer Entfernung von größer/gleich 10 mm von einer Umfangsfläche des Messwertgebers bzw. des Massbands beabstandet. In einer besonders bevorzugten Ausführungsform beträgt die Entfernung zwischen 10 und 30mm, mehr bevorzugt zwischen 10 und 20mm.

Die Ansprechzeit der Sensoranordnung liegt vorzugsweise bei weniger als 300ms, mehr bevorzugt bei weniger als 150ms und am bevorzugtesten bei weniger als 100ms.

Weitere vorteilhafte Einzelheiten der Erfindung ergeben sich aus der nachfolgenden Beschreibung bevorzugter Ausführungsbeispiele sowie anhand der Figuren. Diese zeigen in:
**Fig. 1** eine Aufsicht auf den erfindungsgemäßen Messwertgeber,
**Fig. 2** eine schematische Seitenansicht des erfindungsgemäßen Systems,
**Fig. 3** eine perspektivische Ansicht einer bevorzugten Ausführungsform des Trägerrings des Messwertgebers,
**Fig. 4a-4e** eine Seitenansicht, eine Aufsicht, eine Schnittansicht der Verbindungsmittel, eine Detailansicht des Verbindungsbereichs in Aufsicht und eine perspektivische Ansicht des erfindungsgemäßen Messwertgebers nach einer ersten bevorzugten Ausführungsform,
**Fig. 5a-5e** eine Seitenansicht, eine Aufsicht, eine Schnittansicht der Verbindungsmittel, eine Detailansicht des Verbindungsbereichs in Aufsicht und eine perspektivische Ansicht des erfindungsgemäßen Messwertgebers nach einer zweiten bevorzugten Ausführungsform,
**Fig. 6a-6e** eine Seitenansicht, eine Aufsicht, eine Schnittansicht der Verbindungsmittel, eine Detailansicht des Verbindungsbereichs in Aufsicht und eine perspektivische Ansicht des Messwertgebers nach einer dritten bevorzugten Ausführungsform, und
**Fig. 7a-7c** eine Aufsicht und eine Seitenansicht einer weiteren bevorzugten Ausführungsform des erfindungsgemäßen Messwertgebers, sowie eine perspektivische Aufsicht eines entsprechenden Trägerrings.

In den Figuren sind gleiche Elemente und Elemente mit der gleichen Funktion mit den gleichen Bezugszeichen versehen.

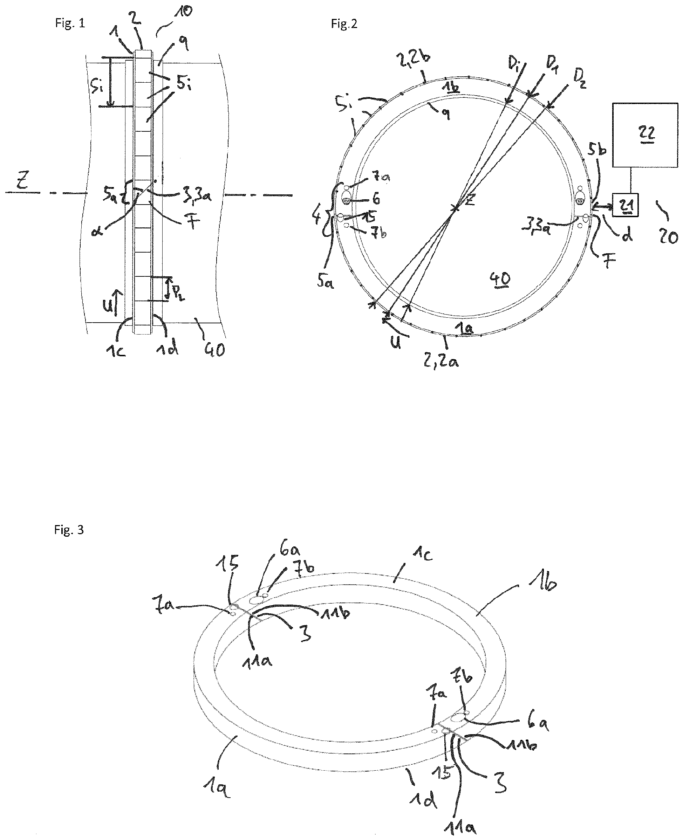

Fig. 1 zeigt eine Aufsicht auf eine bevorzugte Ausführungsform des Messwertgebers 10, d.h. eine Aufsicht auf eine Umfangsfläche F des Messwertgebers 10, insbesondere auf einen hierunter näher beschriebenen Verbindungsbereich 3, in eine Richtung orthogonal zur Rotationsachse Z des Messwertgebers.

Der erfindungsgemäße Messwertgeber 10 umfasst einen Trägerring 1 und ein auf diesem umfangsseitig angeordnetes, beispielsweise aufgeklebtes, Massband 2. Der Messwertgeber 10 ist wie in der Figur gezeigt mittels Einstellmittel 9 in Form eines länglichen Gummibands wie beispielsweise einem doppelseitigen Klebeband auf einer Welle 40 einer Fahrtreppe montierbar. Die Breite des Gummibands ist größer gewählt als die des Trägerrings 1 und des Massbands 2. Die Breite des Trägerrings 1 kann eine etwas größere Breite, vorzugsweise eine 1 bis 15% größere, mehr bevorzugt eine 5 bis 10% größere Breite als das Massband 2 aufweisen.

Der Messwertgeber 10 ist zum Zwecke der vereinfachten Montage an der Fahrtreppenwelle 40 zweiteilig ausgebildet und weist zwei vorzugsweise im Wesentlichen halbkreisförmige Elemente des Trägerrings 1a,1b und des Massbands 2a,2b auf (siehe auch Fig. 2). Der Trägerring 1 und das Massband 2 sind vorzugsweise in zwei im Wesentlichen gleich große Elemente 1a,1b,2a,2b hälftig geteilt. Alternativ zur gezeigten Ausführungsform kann der Messwertgeber 10 auch aus mehreren Segmenten gebildet sein. Die entsprechenden Elemente 1a,1b,2a,2b sind mittels weiter unten näher beschriebenen Verbindungsmitteln 4 an vorzugsweise zwei Verbindungsbereichen 3 zu einem durchgehenden Ring, d.h. einem Ring vorzugsweise ohne einen durch dessen Querschnitt verlaufenden durchgehenden Spalt, selektiv verbindbar.

Das Massband 2 weist eine Vielzahl in Umfangsrichtung U angeordneter magnetischer Pole 5i auf. Diese sind in Umfangsrichtung im Wesentlichen unterbrechungsfrei und alternierend angeordnet, dies bedeutet, dass auf einen im Massband eingebrachten Nordpol ein ins Massband eingebrachter Südpol in Umfangsrichtung U folgt. Die jeweiligen Pole 5i weisen eine homogene Pollänge P_{L} in Umfangsrichtung auf. Diese liegt vorzugsweise zwischen 10 und 20mm und mehr bevorzugt zwischen 15 und 17mm in Umfangsrichtung. Durch diese Anordnung der Pole im Massband wird eine Lagekodierung des Messwertgebers und somit der Fahrtreppenwelle 40 bereitgestellt, welche durch eine geeignete Sensorik 20 (siehe Fig. 2) auslesbar ist. Gemäß der oben beschriebenen Anordnung der Pole weist die Lagekodierung ein periodisch widerkehrendes Signal Si mit einer vordefinierten Frequenz auf. Der Messwertgeber 10 stellt somit einen Inkrementalwertgeber für die Abtastung mittels geeigneter Sensorik 20 dar. Die in Fig. 1 dargestellten magnetischen Pole 5i,5a,5b sind gleichermaßen in dem jeweiligen Massband gemäß der anderen Ausführungsbeispiele enthalten, wurden aber teilweise aufgrund der zeichnerischen Übersichtlichkeit weggelassen.

Erfindungsgemäß sind nun die magnetischen Pole 5i derart auf dem Massband 2 angeordnet bzw. in dieses durch geeignete Magnetisierung eingebracht, dass sich jeweils ein einzelner Pol 5a,5b der Pole 5i in Umfangsrichtung U des Messwertgebers 10 über den jeweiligen Verbindungsbereich 3 erstreckt. Im Falle des dargestellten Ausführungsbeispiels erstreckt sich somit ein einzelner Pol 5a über einen ersten Verbindungsbereich 3 der Messwertgeberelemente 1a,1b,2a,2b und ein zweiter Pol 5b über einen zweiten, vorzugsweise gegenüberliegenden Verbindungsbereich 3 der Messwertgeberelemente 1a,1b,2a,2b, jeweils in radialer Draufsicht auf den jeweiligen Pol 5a,5b des Messwertgebers. Die genaue Polung, Nord- oder Südpol, des jeweils einzelnen sich über den jeweiligen Verbindungsbereich 3 erstreckenden Pols 5a,5b ist dabei vorzugsweise egal.

Der jeweilige Verbindungsbereich 3 des Trägerrings 1 und des Massbands 2 ist vorzugsweise eine jeweilige Ebene 3a, an der sich die jeweiligen Enden 11a,11b,12a,12b des Trägerrings 1 und des Massbands 2 gegenüberliegen. Der jeweilige Verbindungsbereich 3 des Trägerrings 1 und des Massbands 2 bzw. die Verbindungsebene 3a ist gegenüber der Umfangsrichtung U des Messwertgebers 10 und/oder gegenüber einer planaren Seitenfläche 1c,1d des Trägerrings geneigt angeordnet. Dies bedeutet, dass der jeweilige Verbindungsbereich 3 in Draufsicht auf die Umfangsfläche F des Messwertgebers 10 nicht orthogonal zur Umfangsrichtung U und/oder zur Seitenfläche 1c verläuft, sondern einen Winkel α zu dieser aufweist. Der Winkel α weist vorzugsweise einen Wert von 35-65°, mehr bevorzugt von 40 bis 50° und am bevorzugtesten einen Wert von etwa 45° auf.

Die Verbindungsebene 3a ist insbesondere ein jeweiliger Spalt zwischen den jeweiligen Enden 11a,11b,12a,12b des Trägerrings 1 und des Massbands 2. Ein Spalt zwischen den jeweiligen Enden des Trägerrings 11a,11b kann eine Dicke von weniger als 1mm, vorzugsweise weniger als 0.6mm aufweisen. Der jeweilige Spalt des Trägerrings 1 ist vorzugsweise in Querschnittsansicht des Trägerrings 1 nicht durchgehend, insbesondere durch die darin teilweise angeordneten Verbindungsmittel 4 des Trägerrings 1. Ein Spalt zwischen den jeweiligen Enden des Massbands 12a,12b kann eine Dicke von weniger als 0.8mm, vorzugsweise weniger als 0.3mm aufweisen.

Der Verbindungsbereich 3 bzw. die Verbindungsebene 3a ist vorzugsweise jeweils mittig bzw. in einem zentralen Bereich des jeweiligen sich über den Verbindungsbereich 3 erstreckenden Pols 5a,5b angeordnet. Vorteilhafterweise kann der jeweilige Verbindungsbereich 3 den sich über den Verbindungsbereich 3 erstreckenden Pol 5a,5b annähernd hälftig teilen.

Die Fig. 2 zeigt eine schematische Seitenansicht des erfindungsgemäßen Systems aufweisend den oben beschriebenen Messwertgeber 10 und eine Sensoranordnung 20 zum Abtasten der Lagekodierung des Messwertgebers 10. Die Sensoranordnung 20 weist lediglich einen Sensor 21, vorzugsweise einen Sensor der MR Klasse oder einen Hall Sensor, auf. Der Sensor 21 ist vorzugsweise in radialer Erstreckungsrichtung des Messwertgebers 10 angeordnet, derart, dass dieser auf die Umfangsfläche F gerichtet ist bzw. dass dieser das sich in Umfangsrichtung U drehenden magnetische Massband 2 abtasten kann. Der Sensor 21 ist gegenüber der Umfangsfläche F bzw. Außenfläche des Messwertgebers 10 in einer Entfernung d von vorzugsweise größer/gleich 10 mm beabstandet.

Der Außendurchmesser D₂ des Massbands 2 und/oder ein Außendurchmesser D₁ des Trägerrings 1 können an eine vordefinierte Pollänge P_{L} der magnetischen Pole 5i des Massbands angepasst sein, insbesondere derart, dass keine magnetische Lücke oder Inkonsistenz in Umfangrichtung U des verbundenen Trägerrings 1 und Massbands 2 vorliegt. Ein Innendurchmesser Dᵢ des Trägerrings 1 ist vorzugsweise auf einen Außendurchmesser der Fahrtreppenwelle 40 angepasst. Die bereits oben beschrieben Einstellmittel 9 ermöglichen einen Toleranzausgleich bei der Montage des Messwertgebers 10 auf der Welle 40.

Bei einer Drehung der Fahrtreppenwelle 40 und somit des darauf angeordneten Messwertgebers 10 um die Rotationsachse Z erfasst die Sensoranordnung 20 die magnetischen Feldänderungen bzw. den magnetischen Feldlinienverlauf des Messwertgebers 10 und berechnet daraus die Lage, Geschwindigkeit und/oder die Beschleunigung der Welle 40 und kann diese an eine Steuerungseinrichtung 22 weitergeben.

Fig. 3 zeigt eine perspektivische Ansicht einer bevorzugten Ausführungsform des Trägerrings 1 des Messwertgebers 10. Wie oben bereits beschrieben, weist dieser zwei im Wesentlichen halbkreisförmige Elemente 1a, 1b auf, welche in einem jeweiligen Verbindungsbereich 3 miteinander verbindbar sind. Der Ring 1 wird vorzugsweise als Drehteil gefertigt, anschließend werden die im Folgenden näher beschriebenen Bohrungen und/oder Gewinde für die Verbindungsmittel 4 gesetzt. Daraufhin erfolgt eine Trennung des Rings 1 in vorzugsweise zwei Hälften 1a,1b, wobei es zu einem Materialabtrag kommt, welcher durch die Verbindungsmittel 4 ausgleichbar ist.

Der Trägerring 1 weist eine homogene Breite mit zwei parallelen Seitenflächen 1c,1d auf. Der Ring 1 weist weiterhin einen homogenen Innen- und Außendurchmesser Dᵢ, D₁ auf.

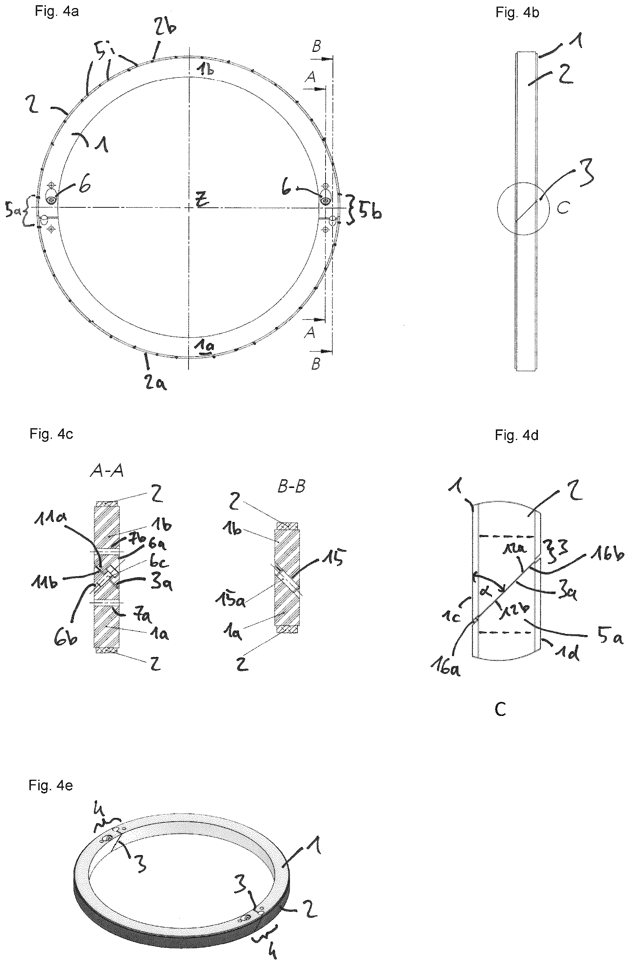

Die Verbindungsmittel 4 des Trägerrings weisen jeweils eine Durchgangsbohrung 15 zur Aufnahme eines Pass- bzw. Zylinderstiftes 15a (siehe auch Fig. 4c,5c,6c) auf. Diese Durchgangsbohrungen 15 erstrecken sich axial versetzt zur Verbindungsebene 3a der Trägerringelemente 1a,1b. Insbesondere ist die Durchgangsbohrung 15 zu mehr als 60% vorzugsweise mehr als 70% ihrer Fläche in einem ersten Trägerringelement 1a angeordnet. Hierdurch kann eine vereinfachte Montage und Zentrierung der Trägerringelemente mittels zunächst in das Trägerringelement 1a eingesetzten Pass- bzw. Zylinderstiften 15a erfolgen. Die eingesetzten Pass- bzw. Zylinderstifte 15a ermöglichen auch einen Ausgleich des bei der Trennung des Rings auftretenden Materialabtrags.

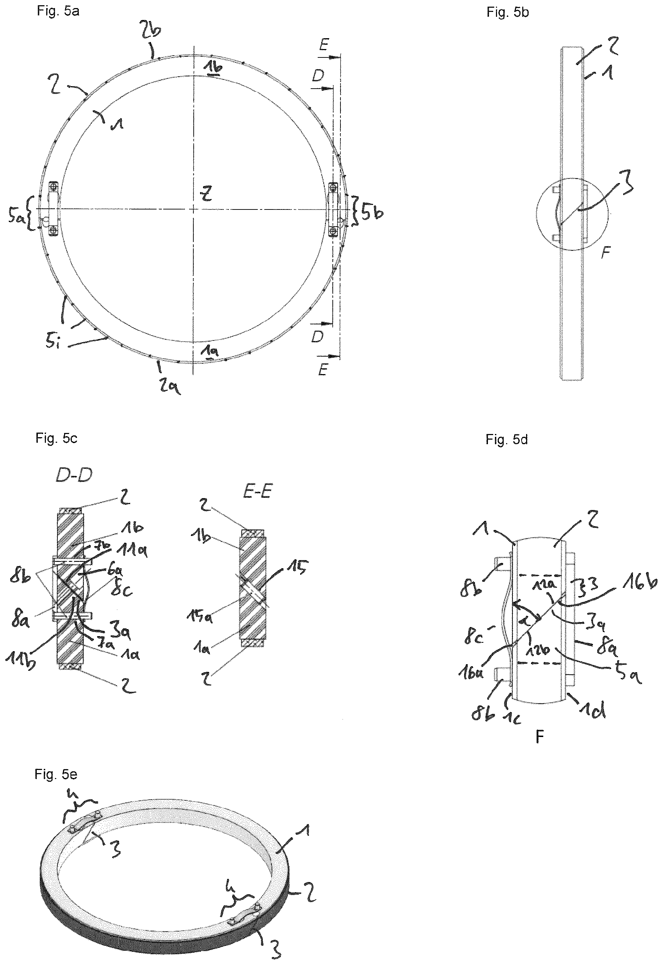

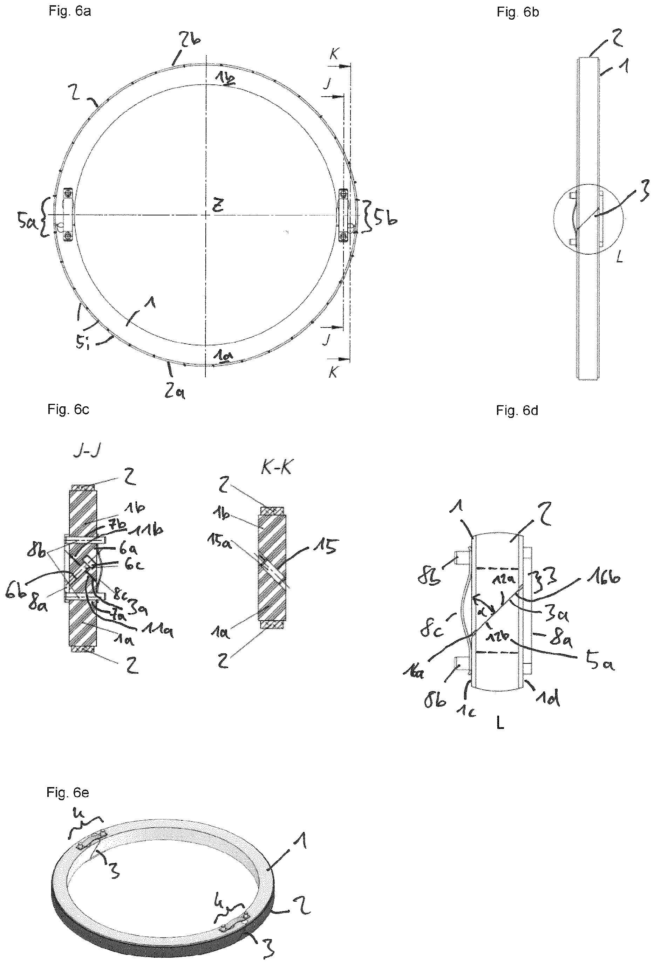

Der Verbindungsmittel 4 des Trägerrings 1 weisen vorzugsweise weiterhin eine Bohrung 6a für eine Schraubverbindung 6 auf (siehe auch Fig. 4a-4e und Fig. 6a-6e), welche vorzugsweise orthogonal zu einer Verbindungsebene 3a der Trägerringelemente 1a,1b angeordnet ist. Zusätzlich oder alternativ kann der Trägerring 1 zwei benachbarte Bohrungen 7a,7b in den jeweiligen Enden der Trägerringelemente 1a,1b aufweisen, welche mittels einer passenden Halteplatte 8a mit einsetzten Pass- bzw. Zylinderstiften 8b verbindbar sind (siehe auch Fig. 5a-5e und Fig. 6a-6e).

Die Verbindungsmittel 4 des Trägerrings 1 weisen vorzugsweise weiterhin jeweils zwei benachbarte Bohrungen 7a,7b in den jeweiligen Enden der Trägerringelemente 1a,1b auf, welche vorzugsweise parallel zur Rotationsachse Z des Trägerrings 1 verlaufen und in welche mit einer Halteplatte 8a verbundene Zylinderstifte 8b einsetzbar sind.

Die oben beschriebenen Verbindungsmittel 4 können erfindungsgemäß unterschiedlich kombiniert sein, wie im Folgenden anhand der Figuren 4a-4e, 5a-5e und 6a-6e beschrieben wird.

Die Figuren 4a-4e zeigen ein erstes bevorzugtes Ausführungsbeispiel, gemäß welchem die Trägerringelemente 1a,1b miteinander mittels der in den Bohrungen 15 befindlichen Zylinderstifte 15a verbunden sind. Zusätzlich sind die Trägerringelemente 1a,1b miteinander mittels der Schraubverbindung 6 verbunden. Diese ist vorzugsweise orthogonal zur Verbindungsfläche 3 der Trägerringelemente 1a,1b angeordnet und umfasst eine vorzugsweise gestufte Bohrung 6a eine dazu im jeweiligen anderen Trägerringelement angeordnete Gewindebohrung 6b und eine zugehörige Schraube 6c. Diese Anordnung der Verbindungsmittel 4 ermöglicht eine sichere Verbindung der einzelnen Trägerringelemente 1a,1b, welche dennoch selektiv beispielsweise zu Wartungszwecken trennbar ist.

Die Figuren 5a-5e zeigen ein zweites bevorzugtes Ausführungsbeispiel, gemäß welchem die Trägerringelemente 1a,1b miteinander mittels der in den Bohrungen 15 befindlichen Zylinderstifte 15a und zusätzlich mittels in den benachbarten Bohrungen 7a,7b der jeweiligen Trägerringelemente 1a,1b eingesetzten Pass- bzw. Zylinderstiften 8b verbunden sind. Diese werden mittels einer Halteplatte 8a gehalten, welche zwei zu den Bohrungen 7a,7b koaxial angeordnete Bohrungen 14a,14b aufweist. Die der Halteplatte 8a gegenüberliegenden Enden der Pass- bzw. Zylinderstifte 8b können mittels eines federelastischen Spannelements 8c wie beispielsweise einer Montageklammer gesichert sein. Die oben beschriebenen Verbindungsmittel ermöglichen eine sichere Verbindung der einzelnen Trägerringelemente 1a,1b, welche besonders einfach voneinander und insbesondere ohne weitere Hilfsmittel wie beispielsweise einem Schraubenzieher trennbar ist.

Die Figuren 6a-6e zeigen ein drittes bevorzugtes Ausführungsbeispiel, gemäß welchem die Trägerringelemente 1a,1b mittels einer Kombination der in Fig. 4a-4e und 5a-5e gezeigten Verbindungsmittel 4 verbunden ist. Insbesondere sind die Trägerringelemente 1a,1b miteinander mittels der in den Bohrungen 15 befindlichen Zylinderstifte 15a, zusätzlich mittels in den benachbarten Bohrungen 7a,7b der jeweiligen Trägerringelemente 1a,1b eingesetzten Pass- bzw. Zylinderstifte 8b, und weiterhin zusätzlich mittels der zuvor beschrieben Schraubverbindung 6 verbunden. Die oben beschriebenen Verbindungsmittel ermöglichen eine sehr sichere Verbindung der einzelnen Trägerringelemente 1a,1b, welche dennoch beispielsweise zu Wartungszwecken einfach voneinander trennbar ist.

Alle der oben mit Verweis auf die Figuren 4a-4e, 5a-5e und 6a-6e beschriebenen Ausführungsformen weisen weiterhin die Merkmale der mit Verweis auf die Figuren 1 und 2 beschriebenen Merkmale insbesondere bezüglich des auf dem Trägerring 1 angeordneten Massbands 2 auf. Zur Vermeidung von Wiederholungen wird daher auf die diesbezügliche Beschreibung der Figuren 1 und 2 verwiesen.

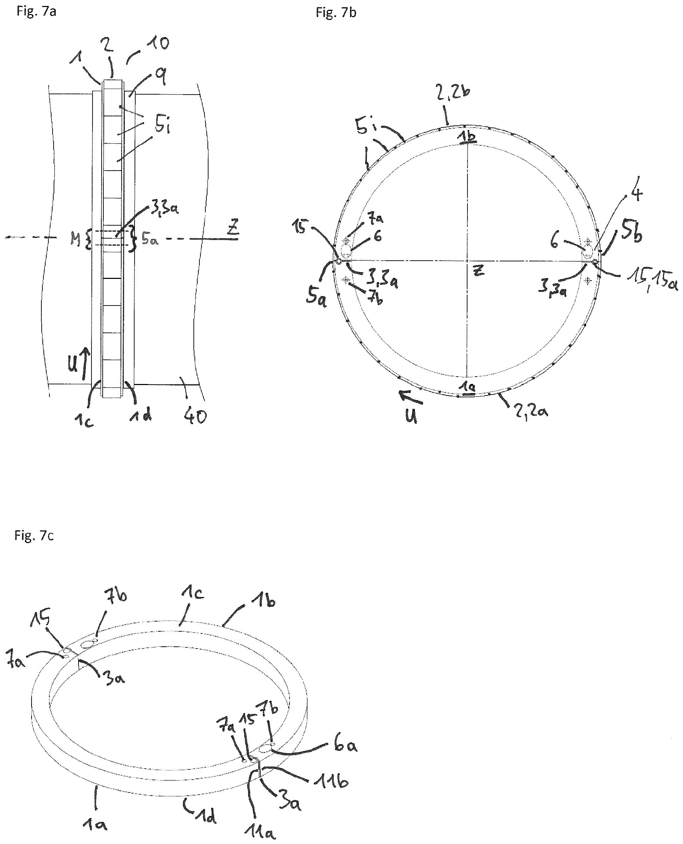

In den Figuren 7a bis 7c ist eine weitere bevorzugte Ausführungsform des erfindungsgemäßen Messwertgebers 10 gezeigt. In dieser ist der Verbindungsbereich 3 des Trägerrings 1 und des Massbands 2 vorzugsweise orthogonal zur Umfangsrichtung U des Messwertgebers 10 und/oder zu einer planaren Seitenfläche 1c,1d des Trägerrings angeordnet. Der Verbindungsbereich ist auch hier vorzugsweise eine Ebene 3a, an der sich die jeweiligen Enden 11a,11b,12a,12b des Trägerrings 1 und des Massbands 2 im Wesentlichen parallel gegenüberliegen. Wie in der Figur 7a gezeigt, ist der Verbindungsbereich 3 vorzugsweise in einem Mittelbereich M (zwischen den gestrichelten Linien in Fig. 7a) des jeweiligen Pols 5a,5b angeordnet. Dieser ist mittig zu den benachbarten Polen 5i bzw. zu den Polgrenzen des jeweiligen Pols 5a,5b angeordnet. Der Mittelbereich M erstreckt sich vorzugsweise parallel zur Rotationsachse Z und weist bevorzugt eine Fläche von bis zu 50%, mehr bevorzugt bis zu 25% des sich über den Verbindungsbereich erstreckenden Pols auf.

Analog zu den oben beschriebenen Ausführungsformen weist auch der hier gezeigte Messwertgeber 10 Verbindungsmittel auf, welche vorzugsweise jeweils eine Bohrung 15 mit darin eingesetztem Zylinderstift 15a aufweisen (siehe Fig. 7b und 7c). Die Bohrung 15 und der eingesetzte Zylinderstift 15a verlaufen vorzugsweise parallel zur Verbindungsebene 3a. Im Gegensatz zu den oben beschriebenen Ausführungsformen ist die Bohrung 15 und der Zylinderstift 15a hier vorzugsweise parallel zur Rotationsachse Z angeordnet. Auch in diesem Ausführungsbeispiel erstreckt sich die jeweilige Durchgangsbohrung 15 axial versetzt zur Verbindungsebene 3a der Trägerringelemente 1a,1b. Insbesondere ist die Durchgangsbohrung 15 zu mehr als 60% vorzugsweise mehr als 70% ihrer Fläche in einem ersten Trägerringelement 1a angeordnet. Die Verbindungsmittel 4 können analog zu den oben beschriebenen Ausführungsbeispielen zusätzlich oder alternativ jeweils eine Schraubverbindung 6 und/oder eine Verbindung mittels benachbarter Bohrungen 7a,7b in den jeweiligen Trägerringelementen 1a,1b aufweisen, welche mittels einer Halteplatte 8a (in den Figuren 7a-7c nicht gezeigt) und darin eingesetzten Pass- bzw. Zylinderstiften 8b verbunden werden können.

Die oben beschriebenen Ausführungsformen sind lediglich beispielhaft, wobei die Erfindung keineswegs auf die in den Figuren gezeigten Ausführungsformen beschränkt ist, sondern allein durch die Ansprüche definiert ist.

## Patentansprüche

1. Messwertgeber (10) für eine Welle (40) einer Fahrtreppe zur Bereitstellung einer Lagekodierung aufweisend einen Trägerring (1) und ein darauf umfangsseitig angeordnetes magnetisches Massband (2), wobei der Trägerring (1) und das Massband (2) zweiteilig in Form von vorzugsweise halbkreisförmigen Elementen (1a,1b,2a,2b) ausgebildet sind und in einem jeweiligen Verbindungsbereich (3) selektiv über Verbindungsmittel (4) des Trägerrings (1) miteinander verbindbar sind, wobei das Massband (2) eine Vielzahl in Umfangsrichtung angeordneter magnetischer Pole (5i) aufweist, **dadurch gekennzeichnet, dass** die magnetischen Pole (5i) derart im Massband (2) angeordnet sind, dass sich jeweils ein einzelner magnetischer Pol (5a,5b) in Umfangsrichtung (U) des Messwertgebers (10) über den jeweiligen Verbindungsbereich (3) von Trägerring (1) und Massband (2) erstreckt.

2. Messwertgeber nach Anspruch 1, **dadurch gekennzeichnet, dass** der jeweilige Verbindungsbereich (3) von Trägerring (1) und Massband (2) gegenüber einer Umfangsrichtung (U) des Messwertgebers (10) geneigt angeordnet ist.

3. Messwertgeber nach Anspruch 2, **dadurch gekennzeichnet, dass** der jeweilige Verbindungsbereich (3) gegenüber einer Umfangsrichtung (U) des Messwertgebers (10) in einem Winkel (a) von 35-65°, mehr bevorzugt von 40 bis 50° und am bevorzugtesten in einem Winkel von etwa 45° angeordnet ist.

4. Messwertgeber nach einem der vorhergehenden Ansprüche, **dadurch gekennzeichnet, dass** die magnetischen Pole (5i) derart angeordnet sind, dass der jeweilige Verbindungsbereich (3) den sich über den Verbindungsbereich (3) erstreckenden Pol (5a,5b) annähernd hälftig teilt und/oder dass der sich über den jeweiligen Verbindungsbereich erstreckende Pol (5a,5b) an diesem annähernd zentriert ist.

5. Messwertgeber nach einem der vorhergehenden Ansprüche, **dadurch gekennzeichnet, dass** der jeweilige Verbindungsbereich (3) eine Ebene (3a) ist, an der sich die jeweiligen Enden (11a,11b,12a,12b) des Trägerrings (1) und/oder des Massbands (2) gegenüberliegen.

6. Messwertgeber nach einem der vorhergehenden Ansprüche, **dadurch gekennzeichnet, dass** ein im Verbindungsbereich (3) liegender Spalt (16a) zwischen den jeweiligen Enden des Trägerrings (11a,11b) eine Dicke von weniger als 1mm, vorzugsweise weniger als 0,6mm aufweist.

7. Messwertgeber nach einem der vorhergehenden Ansprüche, **dadurch gekennzeichnet, dass** ein im Verbindungsbereich (3) liegender Spalt (16b) zwischen den jeweiligen Enden des Massbands (12a,12b) eine Dicke von weniger als 0,8mm, vorzugsweise weniger als 0,3mm aufweist.

8. Messwertgeber nach einem der vorhergehenden Ansprüche, **dadurch gekennzeichnet, dass** die magnetischen Pole (5i) des Massbands in Umfangsrichtung (U) im Wesentlichen unterbrechungsfrei angeordnet sind.

9. Messwertgeber nach einem der vorhergehenden Ansprüche, **dadurch gekennzeichnet, dass** die magnetischen Pole (5i) des Massbands (2) in Umfangrichtung (U) alternierend angeordnet sind.

10. Messwertgeber nach einem der vorhergehenden Ansprüche, **dadurch gekennzeichnet, dass** die magnetischen Pole (5i) des Massbands (2) eine homogene Pollänge (P_{L}) in Umfangsrichtung aufweisen.

11. Messwertgeber nach einem der vorhergehenden Ansprüche, **dadurch gekennzeichnet, dass** eine Pollänge (P_{L}) der Pole (5i) des Massbands (2) zwischen 10 bis 20mm und vorzugsweise zwischen 15 und 17mm in Umfangsrichtung (U) beträgt.

12. Messwertgeber nach einem der vorhergehenden Ansprüche, **dadurch gekennzeichnet, dass** die Lagekodierung einen Massstab bildet, welcher von einem geeigneten Sensor (21) ausgelesen werden kann.

13. Messwertgeber nach einem der vorhergehenden Ansprüche, **dadurch gekennzeichnet, dass** die Lagekodierung ein periodisch widerkehrendes Signal (Sᵢ) mit einer vordefinierten Frequenz aufweist.

14. Messwertgeber nach einem der vorhergehenden Ansprüche, **dadurch gekennzeichnet, dass** ein Außendurchmesser (D₂) des Massbands (2) und/oder ein Außendurchmesser (D₁) des Trägerrings (1) an eine vordefinierte Pollänge (P_{L}) der magnetischen Pole (5i) in Umfangsrichtung (U) angepasst ist, derart, dass keine magnetische Lücke oder Inkonsistenz in Umfangrichtung (U) des verbundenen Trägerrings (1) und Massbands (2) vorliegt.

15. Messwertgeber nach einem der vorhergehenden Ansprüche, **dadurch gekennzeichnet, dass** die Lagekodierung mittels Magnetisierung des Massbands (2) und Trägerrings (1) im verbundenen Zustand eingebracht wurde.

16. Messwertgeber nach einem der vorhergehenden Ansprüche, **dadurch gekennzeichnet, dass** die Verbindungsmittel (4) jeweils mindestens eine Durchgangsbohrung (15) zur Aufnahme eines Passstiftes (15a) aufweisen, die parallel zu einer Verbindungsebene (3a) der Trägerringelemente (1a,1b) verläuft und welche vorzugsweise axial versetzt zur Verbindungsebene (3a) der Trägerringelemente verläuft.

17. Messwertgeber nach einem der vorhergehenden Ansprüche, **dadurch gekennzeichnet, dass** die Verbindungsmittel (4) jeweils mindestens eine Schraubverbindung (6) aufweisen, welche vorzugsweise orthogonal zu einer Verbindungsebene (3a) der Trägerringelemente (1a,1b) angeordnet ist.

18. Messwertgeber nach einem der vorhergehenden Ansprüche, **dadurch gekennzeichnet, dass** die Verbindungsmittel (4) jeweils zwei benachbarte Bohrungen (7a,7b) in den jeweiligen Enden der Trägerringelemente (1a,1b) aufweisen, welche vorzugsweise parallel zur Rotationsachse (Z) des Trägerrings (1) verlaufen und in welche mit einer Halteplatte (8a) verbundene Zylinderstifte (8b) einsetzbar sind, und ein zur Sicherung der Zylinderstifte (8b) vorgesehenes federelastisches Spannelement (8c).

19. Messwertgeber nach einem der vorhergehenden Ansprüche, **dadurch gekennzeichnet, dass** der Messwertgeber (10) Einstellmittel (9) in der Form wenigstes eines länglichen Gummibands, vorzugsweise eines doppelseitigen Klebebands, aufweist, welches zwischen der Welle (40) und dem Trägerring (1) anordenbar ist.

20. Messwertgeber nach einem der vorhergehenden Ansprüche, **dadurch gekennzeichnet, dass** der Trägerring (1) aus Metall, vorzugsweise Eisen, besteht, und/oder dass das Massband (2) aus ferromagnetischem Kunststoff, vorzugsweise aus einem Elastomer mit darin eingebetteten ferromagnetischen Partikeln, besteht.

21. Messsystem (30) aufweisend einen Messwertgeber (10) gemäß einem der vorhergehenden Ansprüche und eine Sensoranordnung (20) zum Abtasten der Lagekodierung des Messwertgebers.

22. Messsystem nach Anspruch 21, **dadurch gekennzeichnet, dass** die Sensoranordnung (20) nur einen einzelnen Sensor, vorzugsweise einen Sensor der MR Klasse (21) aufweist.

23. Messsystem nach Anspruch 21 oder 22, **dadurch gekennzeichnet, dass** die Sensoranordnung (20) dazu eingerichtet ist, die Lage, Geschwindigkeit und/oder Beschleunigung der Welle (40) an eine übergeordnete Steuerung (22) weiterzugeben.

24. Messsystem nach einem der Ansprüche 21 bis 23, **dadurch gekennzeichnet, dass** Sensoranordnung (20) in einer Entfernung (d) von größer/gleich 10 mm von einer Außenfläche (F) des Messwertgebers (10) beabstandet ist.

25. Messsystem nach einem der Ansprüche 21 bis 24, **dadurch gekennzeichnet, dass** die Sensoranordnung (20) eine Ansprechzeit von weniger als 300ms und vorzugsweise weniger als 150ms aufweist.

## Claims

1. A measurement transducer (10) for a shaft (40) of an escalator for providing a position code comprising a support ring (1) and a magnetic measuring tape (2) disposed circumferentially on said support ring, the support ring (1) and the measuring tape (2) being realized in two parts in the form of preferably semicircular elements (1a, 1b, 2a, 2b) and being selectively connectable to one another in a respective connection area (3) using connection means (4) of the support ring (1), the measuring tape (2) having a plurality of magnetic poles (5i) disposed in the circumferential direction, **characterized in that** the magnetic poles (5i) are disposed in such a manner in the measuring tape (2) that an individual magnetic pole (5a, 5b) extends in the circumferential direction (U) of the measurement transducer (10) across the respective connection area (3) of the support ring (1) and the measuring tape (2) in each instance.

2. The measurement transducer according to claim 1, **characterized in that** the respective connection area (3) of the support ring (1) and the measuring tape (2) is disposed at an angle in relation to a circumferential direction (U) of the measurement transducer (10).

3. The measurement transducer according to claim 2, **characterized in that** the respective connection area (3) is disposed at an angle (α) of 35-65°, more preferably 40° to 50°, particularly preferably at an angle of approximately 45°, in relation to a circumferential direction (U) of the measurement transducer (10).

4. The measurement transducer according to any one of the preceding claims, **characterized in that** the magnetic poles (5i) are disposed in such a manner that the respective connection area (3) divides the pole (5a, 5b) which extends across the connection area (3) into two approximately equal halves and/or that the pole (5a, 5b) which extends across the respective connection area is approximately centered at said connection area.

5. The measurement transducer according to any one of the preceding claims, **characterized in that** the respective connection area (3) is a plane (3a), the respective ends (11a, 11b, 12a, 12b) of the support ring (1) and/or of the measuring tape (2) being opposite one another at said plane.

6. The measurement transducer according to any one of the preceding claims, **characterized in that** a gap (16a) disposed in the connection area (3) and between the respective ends of the support ring (11a, 11b) has a thickness of less than 1 mm, preferably less than 0.6 mm.

7. The measurement transducer according to any one of the preceding claims, **characterized in that** a gap (16b) disposed in the connection area (3) and between the respective ends of the measuring tape (12a, 12b) has a thickness of less than 0.8 mm, preferably less than 0.3 mm.

8. The measurement transducer according to any one of the preceding claims, **characterized in that** the magnetic poles (5i) of the measuring tape are essentially disposed in the circumferential direction (U) without interruptions.

9. The measurement transducer according to any one of the preceding claims, **characterized in that** the magnetic poles (5i) of the measuring tape (2) are disposed alternatingly in the circumferential direction (U).

10. The measurement transducer according to any one of the preceding claims, **characterized in that** the magnetic poles (5i) of the measuring tape (2) have a homogenous pole length (P_{L}) in the circumferential direction.

11. The measurement transducer according to any one of the preceding claims, **characterized in that** a pole length (P_{L}) of the poles (5i) of the measuring tape (2) is between 10 mm and 20 mm and preferably between 15 mm and 17 mm in the circumferential direction (U).

12. The measurement transducer according to any one of the preceding claims, **characterized in that** the position code constitutes a scale which can be read by a suitable sensor (21).

13. The measurement transducer according to any one of the preceding claims, **characterized in that** the position code has a periodically recurring signal (Sᵢ) which has a predefined frequency.

14. The measurement transducer according to any one of the preceding claims, **characterized in that** an outside diameter (D₂) of the measuring tape (2) and/or an outside diameter (D₁) of the support ring is adapted to a predefined pole length (P_{L}) of the magnetic poles (5i) in the circumferential direction (U) in such a manner that no magnetic gap or inconsistency exists in the circumferential direction (U) of the interconnected support ring (1) and the measuring tape (2).

15. The measurement transducer according to any one of the preceding claims, **characterized in that** the position code was introduced by magnetizing the measuring tape (2) and the support ring (1) in the connected state.

16. The measurement transducer according to any of the preceding claims, **characterized in that** the connections means (4) each have at least one through bore (15) for accommodating a dowel (15a), said through bore running parallel to a connection plane (3a) of the support ring elements (1a, 1b) and preferably running so as to be axially displaced to the connection plane (3a) of the support ring elements.

17. The measurement transducer according to any one of the preceding claims, **characterized in that** the connection means (4) each have at least one screw connection (6) which is preferably disposed orthogonal to a connection plane (3a) of the support ring elements (1a, 1b).

18. The measurement transducer according to any one of the preceding claims, **characterized in that** the connection means (4) each have two adjacent bores (7a, 7b) in the respective ends of the support ring elements (1a, 1b) and a spring-biased clamping element (8c) provided for securing the cylindrical pins (8b), said bores running preferably parallel to the axis of rotation (Z) of the support ring (1) and cylindrical pins (8b) connected to a holding plate (8a) being insertable in said bores.

19. The measurement transducer according to any one of the preceding claims, **characterized in that** the measurement transducer (10) has adjustment means (9) in the form of at least one oblong rubber band, preferably a double-sided adhesive tape, which can be disposed between the shaft (40) and the support ring (1).

20. The measurement transducer according to any one of the preceding claims, **characterized in that** the support ring (1) is made of metal, preferably iron, and/or that the measuring tape (2) is made of ferromagnetic plastic, preferably an elastomer having ferromagnetic particles which are embedded therein.

21. A measurement system (30) comprising a measurement transducer (10) according to any one of the preceding claims and a sensor assembly (20) for scanning the position code of the measurement transducer.

22. The measurement system according to claim 21, **characterized in that** the sensor assembly (20) has an individual sensor, preferably an MR sensor (21).

23. The measurement system according to claim 21 or 22, **characterized in that** the sensor assembly (20) is configured to transmit the position, speed and/or acceleration of the shaft (40) to an overriding control device (22).

24. The measurement system according to any one of claims 21 to 23, **characterized in that** the sensor assembly (20) is spaced apart from an outer surface (F) of the measurement transducer (10) at a distance (d) of more than/equal to 10 mm.

25. The measurement system according to any one of claims 21 to 24, **characterized in that** the sensor assembly (20) has a response time of less than 300 ms and preferably less than 150 ms.

## Revendications

1. Transmetteur de signaux (10) pour un arbre (40) d'un escalier mécanique pour fournir un codage de position, ledit transmetteur de signaux (10) comprenant un anneau de support (1) et un mètre à ruban (2) magnétique disposé sur le côté de circonférence sur ledit anneau de support (1), l'anneau de support (1) et le mètre à ruban (2) étant réalisés en deux parties en forme d'éléments (1a, 1b, 2a, 2b) qui sont, de préférence, semi-circulaires et étant capables d'être reliés l'un à l'autre dans une zone de liaison (3) respective sélectivement via des moyens de liaison (4) de l'anneau de support (1), le mètre à ruban (2) ayant une pluralité de pôles (5i) magnétiques disposés dans la direction de circonférence, **caractérisé en ce que** les pôles (5i) magnétiques sont disposés dans le mètre à ruban (2) de telle manière qu'un seul pôle (5a, 5b) magnétique s'étend sur chaque zone de liaison (3) respective de l'anneau de support (1) et du mètre à ruban (2) dans la direction de circonférence (U) du transmetteur de signaux (10).

2. Transmetteur de signaux selon la revendication 1, **caractérisé en ce que** la zone de liaison (3) respective de l'anneau de support (1) et du mètre à ruban (2) est disposée de manière inclinée par rapport à une direction de circonférence (U) du transmetteur de signaux (10)

3. Transmetteur de signaux selon la revendication 2, **caractérisé en ce que** la zone de liaison (3) respective est disposée par rapport à une direction de circonférence (U) du transmetteur de signaux (10) selon un angle (a) de 35° à 65°, plus préférentiellement de 40° à 50° et, de la manière la plus préférée, selon un angle d'environ 45°.

4. Transmetteur de signaux selon l'une quelconque des revendications précédente, **caractérisé en ce que** les pôles (5i) sont disposés de telle manière que la zone de liaison (3) respective divise le pôle (5a, 5b) qui s'étend sur la zone de liaison (3) en deux moitiés approximativement égales et/ou que le pôle (5a, 5b) qui s'étend sur la zone de liaison respective est approximativement centré sur ladite zone de liaison.

5. Transmetteur de signaux selon l'une quelconque des revendications précédente, **caractérisé en ce que** la zone de liaison (3) respective est un plan (3a) sur lequel les extrémités (11a, 11b, 12a, 12b) respectives de l'anneau de support (1) et/ou du mètre à ruban (2) sont opposées.

6. Transmetteur de signaux selon l'une quelconque des revendications précédente, **caractérisé en ce qu'**une fente (16a) située dans la zone de liaison (3) a une épaisseur inférieure à 1 mm, de préférence inférieure à 0,6 mm, entre les extrémités respectives de l'anneau de support (11a, 11b).

7. Transmetteur de signaux selon l'une quelconque des revendications précédente, **caractérisé en ce qu'**une fente (16b) située dans la zone de liaison (3) a une épaisseur inférieure à 0,8 mm, de préférence inférieure à 0,3 mm, entre les extrémités respectives du mètre à ruban (12a, 12b).

8. Transmetteur de signaux selon l'une quelconque des revendications précédente, **caractérisé en ce que** les pôles (5i) magnétiques du mètre à ruban sont disposés essentiellement sans interruption dans la direction de circonférence (U).

9. Transmetteur de signaux selon l'une quelconque des revendications précédente, **caractérisé en ce que** les pôles (5i) magnétiques du mètre à ruban (2) sont disposés de manière alternée dans la direction de circonférence (U).

10. Transmetteur de signaux selon l'une quelconque des revendications précédente, **caractérisé en ce que** les pôles (5i) magnétiques du mètre à ruban (2) ont une longueur de pôle (P_{L}) homogène dans la direction de circonférence (U).

11. Transmetteur de signaux selon l'une quelconque des revendications précédente, **caractérisé en ce qu'**une longueur de pôle (P_{L}) des pôles (5i) du mètre à ruban (2) est entre 10 à 20 mm et, de préférence, entre 15 et 17 mm dans la direction de circonférence (U).

12. Transmetteur de signaux selon l'une quelconque des revendications précédente, **caractérisé en ce que** le codage de position forme une échelle qui est capable d'être lue par un capteur (21) approprié.

13. Transmetteur de signaux selon l'une quelconque des revendications précédente, **caractérisé en ce que** le codage de position a un signal (Sᵢ) se répétant périodiquement ayant une fréquence prédéfinie.

14. Transmetteur de signaux selon l'une quelconque des revendications précédente, **caractérisé en ce qu'**un diamètre extérieur (D₂) du mètre à ruban (2) et/ou un diamètre extérieur (D₁) de l'anneau de support (1) sont/est adapté/s à une longueur de pôle (P_{L}) prédéfinie des pôles (5i) magnétiques dans la direction de circonférence (U) de telle manière qu'il n'existe aucun vide magnétique ou aucune incohérence magnétique dans la direction de circonférence (U) de l'anneau de support (1) relié et du mètre à ruban (2).

15. Transmetteur de signaux selon l'une quelconque des revendications précédente, **caractérisé en ce que** le codage de position a été introduit au moyen de la magnétisation du mètre à ruban (2) et de l'anneau de support (1) dans l'état relié.

16. Transmetteur de signaux selon l'une quelconque des revendications précédente, **caractérisé en ce que** chaque moyen de liaison (4) a au moins un trou traversant (15) pour loger une goupille de positionnement (15a), ledit trou traversant (15) s'étendant parallèlement à un plan (3a) de liaison des éléments (1a, 1b) d'anneau de support et s'étendant, de préférence, de manière à être axialement décalé au plan (3a) de liaison des éléments d'anneau de support.

17. Transmetteur de signaux selon l'une quelconque des revendications précédente, **caractérisé en ce que** chaque moyen de liaison (4) a au moins un assemblage par vis (6) qui est disposé, de préférence, orthogonalement à un plan (3a) de liaison des éléments (1a, 1b) d'anneau de support.

18. Transmetteur de signaux selon l'une quelconque des revendications précédente, **caractérisé en ce que** chaque moyen de liaison (4) a deux forages (7a, 7b) adjacents dans les extrémités respectives des éléments (1a, 1b) d'anneau de support et un élément de serrage (8c) à élasticité de ressort prévu pour fixer des goupilles cylindriques (8b), lesdits forages (7a, 7b) s'étendant, de préférence, parallèlement à l'axe de rotation (Z) de l'anneau de support (1) et des goupilles cylindriques (8b) reliées à une plaque de retenue (8a) étant insérables dans lesdits forages (7a, 7b).

19. Transmetteur de signaux selon l'une quelconque des revendications précédente, **caractérisé en ce que** le transmetteur de signaux (10) a des moyens d'ajustage (9) en forme d'au moins un ruban en caoutchouc oblong, de préférence d'un ruban adhésif double face, qui est capable d'être disposé entre l'arbre (40) et l'anneau de support (1).

20. Transmetteur de signaux selon l'une quelconque des revendications précédente, **caractérisé en ce que** l'anneau de support (1) est en métal, de préférence en fer, et/ou **en ce que** le mètre à ruban (2) est en plastique ferromagnétique, de préférence en un élastomère ayant des particules ferromagnétiques incorporées dans celui-ci.

21. Système de mesure (30) comprenant un transmetteur de signaux (10) selon l'une quelconque des revendications précédentes et un agencement de capteur (20) pour échantillonner le codage de position du transmetteur de signaux.

22. Système de mesure selon la revendication 21, **caractérisé en ce que** l'agencement de capteur (20) n'a qu'un seul capteur, de préférence un capteur (21) de la classe MR.

23. Système de mesure selon la revendication 21 ou 22, **caractérisé en ce que** l'agencement de capteur (20) est configuré pour transmettre la position, la vitesse et/ou l'accélération de l'arbre (40) à une commande supérieure (22).

24. Système de mesure selon l'une quelconque des revendications 21 à 23, **caractérisé en ce que** l'agencement de capteur (20) est espacé d'une distance (d) de supérieure/égale à 10 mm d'une surface extérieure (F) du transmetteur de signaux (10).

25. Système de mesure selon l'une quelconque des revendications 21 à 24, **caractérisé en ce que** l'agencement de capteur (20) a un temps de réponse d'inférieur à 300 ms et, de préférence, d'inférieur à 150 ms.
